# EUROPÄISCHE PATENTSCHRIFT

(11) **EP 1 647 747 B1**
(45) Veröffentlichungstag und Bekanntmachung des Hinweises auf die Patenterteilung: **16.07.2008**
(21) Anmeldenummer: 05021554.0
(22) Anmeldetag: 01.10.2005
(51) Int. Cl.: F16K 11/078

(54) **Mischventil**
Mixing valve
Robinet mitigeur

(30) Priorität: 14.10.2004 DE 102004050250
(43) Veröffentlichungstag der Anmeldung: 19.04.2006
(73) Patentinhaber: Grohe AG, 58675 Hemer (DE)
(72) Erfinder: Pawelzik, Manfred, 59494 Soest (DE); Gebhardt, Wolfgang, 58706 Menden (DE); Steinhoff, Stefan, 59846 Sundern (DE)

(56) Entgegenhaltungen:
- EP-A- 0 648 963
- DE-A1- 3 503 793
- DE-A1- 3 811 708
- DE-C1- 19 508 362

## Beschreibung

Die Erfindung betrifft ein sanitäres Mischventil mit einer durch ein Griffstück zu einer ortsfest gehaltenen, Wasserdurchtrittsöffnungen aufweisenden Ventilsitzscheibe verstellbaren Steuerscheibe, mit der durch Drehung das Mischungsverhältnis und durch radiales Verschieben die Wasserauslaufmenge pro Zeiteinheit einstellbar ist, wobei für die Zuführung von Kalt- und Heißwasser kreisringausschnittförmige Durchtrittsöffnungen zu beiden Seiten einer Symmetrieachse sowie für die Rückführung von Kalt-, Heiß- oder Mischwasser eine zentrale Durchtrittsöffnung in der Ventilsitzscheibe vorgesehen sind und ein in der Steuerscheibe ausgebildeter Überströmkanal mit den Durchtrittsöffnungen wahlweise in Überlappung bringbar ist, und wobei die kreisringausschnitt förmigen Durchtrittsöffungen jeweils von einem Steg unterteilt sind.

Ein Mischventil dieser Gattung ist aus der deutschen Offenlegungsschrift DE-A-35 03 793 bekannt. Um eine komfortable und genaue Einstellung der Mischwässertemperatur, insbesondere zwischen 30° Celsius und 45° Celsius zu ermöglichen (sogenannte Komfortzonensteuerung), ist in der Druckschrift vorgeschlagen, die in der Ventilsitzscheibe angeordneten, von Kreisbögen begrenzten Durch-trittsöffnungen für das zufließende Kalt- und Heißwasser mit Einschnürungen zu versehen, die sich nahezu über die Hälfte der Länge der inneren Kreisbögen erstrecken. Darüber hinaus verengen sich die bekannten Durchtrittsöffnungen von der Symmetrieachse aus zunehmend. Diese Ausbildung des Mischventils erfordert relativ große Außenabmessungen, um die im Allgemeinen geforderte maximale Durchflussmenge pro Zeiteinheit zu ermöglichen. Im Sanitärbereich werden dagegen zunehmend Mischventile mit verkleinerten Außenabmessungen gefordert.

Aus DE-A-38 11 708 ist es bekannt, bei einem Mischventil zur Querschnittsverminderung zwecks Realisierung einer Komfortzonensteuerung in den Kalt- und Warmwasser-Durchtrittsöffnungen der Ventilsitzscheibe perforierte Einsätze anzuordnen, die sich über etwa ein Drittel der Gesamtbogenlänge der Öffnungen erstrecken.

Der Erfindung liegt die Aufgabe zugrunde, dass eingangs angegebene Mischventil weiter zu verbessern. Hierbei gehört es mit zur Aufgabe das Mischventil so auszubilden, dass bei vorgegebenen Außenabmessungen ein möglichst hoher maximaler Durchfluss pro Zeiteinheit erreicht wird.

Diese Aufgabe wird erfindungsgemäß durch ein Mischventil mit den Merkmalen des Anspruchs 1 gelöst.

Weitere Ausgestaltungen der Erfindung sind in den Ansprüchen 2 bis 12 angegeben.

Erfindungsgemäß sind also die beiden Stege so platziert, dass in der mittleren Mischstellung bei voll geöffnetem Durchfluss eine Seitenwand des Überströmkanals eine erste Seitenwand der beiden Stege lediglich berührt, so dass in dieser Stellung, die beiden Stege außerhalb des Überströmkanals angeordnet sind. Die Breite der beiden Stege entspricht erfindungsgemäß jeweils etwa dem 0,8-fachen bis 1,2-fachen des kleinsten Abstandes der beiden Durchtrittsöffnungen für Kalt- und Heißwasser. Dabei werden die beiden Stege zweckmäßig mit einem Winkel von 25° bis 35° zur Symmetrieachse geneigt angeordnet.

Die mit der Erfindung erzielbaren Vorteile bestehen insbesondere darin, dass die Durchtrittsöffnungen für das zufließende Kalt- und Heißwasser im Querschnitt vergrößert werden können, wobei jedoch die feinfühlige Einstellung der Mischwassertemperatur von 30° Celsius bis 45° Celsius aufrecht erhalten werden kann.

In weiterer Ausgestaltung der Erfindung können vorteilhaft die beiden Stege in den Durchtrittsöffnungen für Kalt- und Heißwasser im mittleren Bereich mit einer Unterbrechung ausgebildet sein, oder aber auch lediglich an einem inneren Kreisbogen oder einem äußeren Kreisbogen der Durchtrittsöffnungen nockenförmig in die Durchtrittsöffnungen vorstehend ausgebildet sein, wodurch der Durchtrittsquerschnitt der einzelnen Durchtrittsöffnungennicht unerheblich weiter vergrößert werden kann.

In einer bevorzugten Ausbildung der Erfindung ist in den Durchtrittsöffnungen für Kalt- und Heißwasser jeweils am inneren Kreisbogen ein Steg nockenförmig in die Durchtrittsöffnung vorstehend ausgebildet, wobei vorteilhaft der Steg jeweils mit einer Länge vorstehen sollte, die etwa dem 0,3-fachen bis 0,7-fachen der Breite der Durchtrittsöffnung entspricht. Der Steg kann hierbei zweckmäßig von der Basis des inneren Kreisbogens über seine Länge stetig verjüngt ausgebildet werden, so dass am vorstehenden Endbereich der Steg etwa nur noch zwei Drittel der Breite, die der Steg an der Basis aufweist, hat.

Die Stege in den beiden Durchtrittsöffnungen für Kalt-und Heißwasser können vorteilhaft einstückig mit der Ventilsitzscheibe ausgebildet werden. Es ist aber auch möglich die Stege am Boden des Ventilkartuschengehäuses auszubilden, die dann in der Stecklage in die jeweiligen Durchtrittsöffnungen hineinragen.

Ausführungsbeispiele der Erfindung sind in der Zeichnung dargestellt und werden im Folgenden näher beschrieben. Es zeigt in der Zeichnung:
- Figur 1: ein Mischventil im Längsschnitt, wie es in Sanitärarmaturen eingesetzt wird;
- Figur 2: eine in Figur 1 gezeigte Ventilsitzscheibe in Draufsicht;
- Figur 3: eine in Figur 1 gezeigte Steuerscheibe in Draufsicht;
- Figur 4: die in Figur 1 gezeigte Anordnung der Ventilsitzscheibe und der Steuerscheibe in Draufsicht, wobei die Steuerscheibe eine mittlere Drehstellung einnimmt, in der die Symmetrieachsen der Ventilsitzscheibe und der Steuerscheibe aufeinanderliegen und der Zufluss von Kalt- und Heißwasser von der Steuerscheibe abgesperrt wird;
- Figur 5: das in Figur 4 gezeigte Paar der Ventilscheiben, wobei die Steuerscheibe radial zur Ventilsitzscheibe verschoben ist und der Durchtritt von Kalt- und Heißwasser voll geöffnet ist;
- Figur 6: die in Figur 5 gezeigte Anordnung der Ventilsitzscheibe zu der Steuerscheibe, wobei die Steuerscheibe um 15° nach links zur Symmetrieachse der Ventilsitzscheibe gedreht angeordnet ist;
- Figur 7: die in Figur 5 gezeigte Anordnung der Steuerscheibe zur Ventilsitzscheibe, wobei die Steuerscheibe um einen Winkel von 55° nach links zur Symmetrieachse der Ventilsitzscheibe gedreht angeordnet ist;
- Figur 8: eine zur Figur 2 abgewandelte Ventilsitzscheibe, wobei die Stege an den inneren Kreisbögen der Durchtrittsöffnungen für Kalt- und Heißwasser nockenförmig in die jeweilige Durchtrittsöffnung vorstehen;

- Figur 9: einen Teil der in Figur 8 gezeigten Ventilsitzscheibe in vergrößerter Darstellung;
- Figur 10: eine weitere Ventilsitzscheibe, bei der die Stege in den Durchtrittsöffnungen für Kalt- und Heißwasser jeweils eine Unterbrechung aufweisen;
- Figur 11: eine weitere Ausbildung der Ventilsitzscheibe, wobei die nockenförmig ausgebildeten Stege am äußeren Kreisbogen der Durchtrittsöffnungen für Kalt- und Heißwasser angeordnet sind.

Der Einfachheit halber sind bei den Ausführungsbeispielen in der Zeichnung gleiche oder entsprechende Elemente mit jeweils gleichen Bezugszeichen versehen.

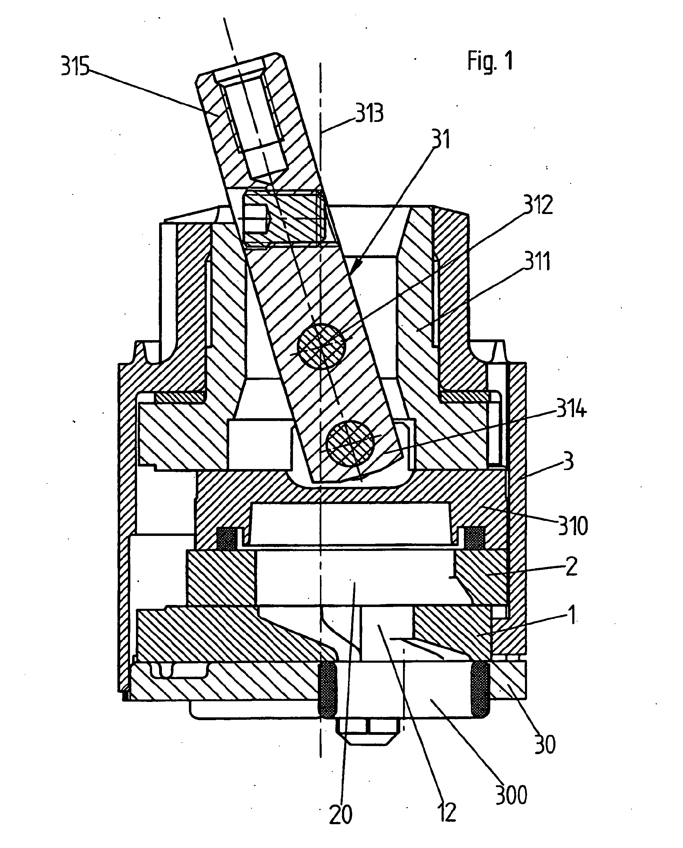

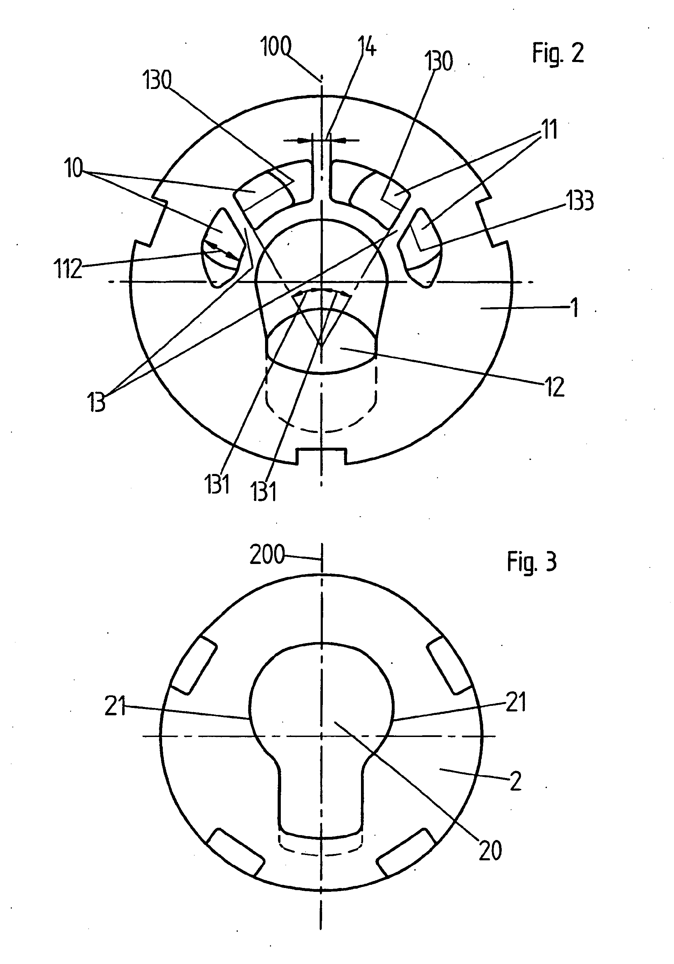

In Figur 1 der Zeichnung ist ein Mischventil in Form einer Ventilkartusche, wie sie in Sanitärarmaturen einsetzbar ist, dargestellt. Das Mischventil ist in einem gestuften, zylindrischen Kartuschengehäuse 3 angeordnet, wobei das Kartuschengehäuse 3 an dem im Durchmesser vergrößerten Endbereich mit einem Boden 30 verschlossen ist. Im Boden 30 ist eine Öffnung 300 für den Wasserabfluss angeordnet. Außerdem sind zwei weitere in der Zeichnung nicht dargestellte Öffnungen für den separaten Zufluss von Kalt- und Heißwasser im Boden 30 ausgebildet. Das in dem Kartuschengehäuse 3 angeordnete Mischventil wird dabei in einer in der Zeichnung nicht dargestellten Sanitärarmatur in eine Öffnung eingeführt und mit dem Boden 30 mit Hilfe von einer oder mehreren Schrauben gegen eine Grundfläche am Armaturenkörper verspannt. Hierbei werden entsprechende Kanäle für das zufließende Kalt- und Heißwasser sowie das abfließende Wasser im Armaturenkörper mit den Öffnungen im Boden 30 des Kartuschengehäuses 3 gedichtet verbunden werden.
Im Innern des Kartuschengehäuses 3 ist an dem Boden 30 eine Ventilsitzscheibe 1 aus Keramikwerkstoff drehfest angelagert, die einen Außendurchmesser von 31,8mm aufweist. In der Ventilsitzscheibe 1 ist zu beiden Seiten einer Symmetrieachse 100 mit einem Abstand 14 zueinander einerseits eine kreisringausschnittförmige Durchtrittsöffnung 10 für den Zufluss von Kaltwasser und andererseits eine kreisringausschnittförmige Durchtrittsöffnung 11 für den Zufluss von Heißwasser symmetrisch angeordnet, wie es insbesondere aus Figur 2 der Zeichnung zu entnehmen ist. Die beiden Durchtrittsöffnungen 10, 11 sind jeweils mit einem Steg 13 unterteilt. Außerdem ist mit Abstand zu den kreisringausschnittförmigen Durchtrittsöffnungen 10,11 eine weitere zentrale Durchtrittsöffnung 12 für den Abfluss von Wasser ausgebildet.
An der von dem Boden 30 abgekehrten Stirnseite der Ventilsitzscheibe 1 ist eine Steuerscheibe 2 aus Keramikwerkstoff angelagert, wobei die aneinanderliegenden Flächen der Ventilsitzscheibe 1 und der Steuerscheibe 2 feinstbearbeitet sind, so dass sie wasserdicht zueinander verschiebbar sind. In der Steuerscheibe 2 ist ein Überströmkanal 20 symmetrisch zu einer Symmetrieachse 200 ausgebildet, wie es insbesondere aus Figur 1 und Figur 3 der Zeichnung zu entnehmen ist. An der von der Ventilsitzscheibe 1 abgekehrten Stirnseite der Steuerscheibe 2 ist eine Führungshaube 310 aufgesetzt, die formschlüssig mit der Steuerscheibe 2 verbunden ist und den Überströmkanal 20 nach außen hin abdichtet. Die Führungshaube 310 liegt andererseits an einer drehbar aber axial im Kartuschengehäuse 3 abgestützten Stufenbuchse 311 an. Außerdem ist in der Stufenbuchse 311 ein Stellhebel 31 auf einer senkrecht zur Drehachse 313 vorgesehenen Schwenkachse 312 verschwenkbar angeordnet, der mit seinem inneren Hebelarm 314 an der Führungshaube 310 angelenkt ist, während am äußeren Hebelarm 315 ein in der Zeichnung nicht dargestellter Handgriff befestigbar ist.
Mit einer Schwenkbewegung des Stellhebels 31 um die Schwenkachse 312 wird somit die Führungshaube 310 und die Steuerscheibe 2 radial zur Ventilsitzscheibe 1 verschoben, während mit einer Drehbewegung um die Drehachse 313 die Führungshaube 310 mit der Steuerscheibe 2 zur Ventilsitzscheibe 1 entsprechend gedreht wird. Durch eine Radialbewegung der Steuerscheibe 2 zur Ventilsitzscheibe 1 kann somit die Gesamtdurchflussmenge des Wassers eingestellt werden, während mit einer Drehbewegung um die Drehachse 313 das Mischungsverhältnis von Kalt- und Warmwasser einstellbar ist.

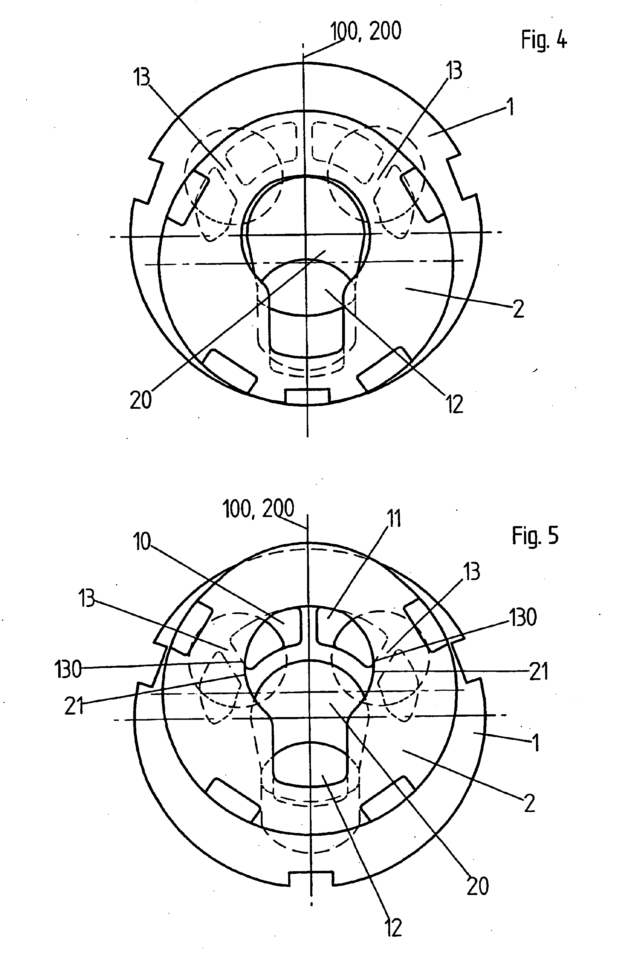

Zur feinfühligen Einstellung der Mischwassertemperatur in dem Temperaturbereich von 30° Celsius bis 45° Celsius ist in beiden Durchtrittsöffnungen 10, 11 je ein Steg 13 vorgesehen. Die Stege 13 sind dabei so platziert, dass eine erste Seitenwand 130 der Stege 13 bei voll geöffnetem Mischventil und in der Drehstellung in der die Symmetrieachse 100 der Ventilsitzscheibe 1 und die Symmetrieachse 200 der Steuerscheibe 2 aufeinander liegen von einer kreisförmigen Seitenwand 21 des Überströmkanals 20 berührt werden, wie es insbesondere aus Figur 5 der Zeichnung zu entnehmen ist. Die Stege 13 weisen dabei eine Breite auf, die etwa dem Abstand 14 der beiden Durchtrittsöffnungen 10, 11 entspricht. Bezogen auf die Länge des Kreisbogens der Durchtrittsöffnung 10, 11 beträgt die Breite des Steges 13 etwa 10% bis 12%. Als günstig hat sich eine Breite des Steges 13 erwiesen, wenn sie etwa das 0,8-fache bis 1,2-fache des Abstandes 14 beträgt. Die beiden Stege 13 sind dabei mit einem Winkel 131 von etwa 30° zur Symmetrieachse 100 geneigt angeordnet.

In Figur 4 der Zeichnung ist die Steuerscheibe 2 zur Ventilsitzscheibe 1 in der Absperrposition dargestellt, wobei die Symmetrieachse 200 der Steuerscheibe 2 sich mit der Symmetrieachse 100 der Ventilsitzscheibe 1 deckt.
Wird nun mit Hilfe des Stellhebels 31 die Steuerscheibe 2 auf ihrer Symmetrieachse 200 radial verschoben, so gelangen zunehmend die Durchtrittsöffnung 10 für Kaltwasser und die Durchtrittsöffnung 11 für Heißwasser in gleichem Umfang mit dem Überströmkanal 20 der Steuerscheibe 2 in Überdeckung, so dass zunehmend aus gleichen Teilen von Kalt- und Heißwasser gebildetes temperiertes Mischwasser über den Überströmkanal 20 in die Durchtrittsöffnung 12 für den Wasserabfluss überströmen kann.

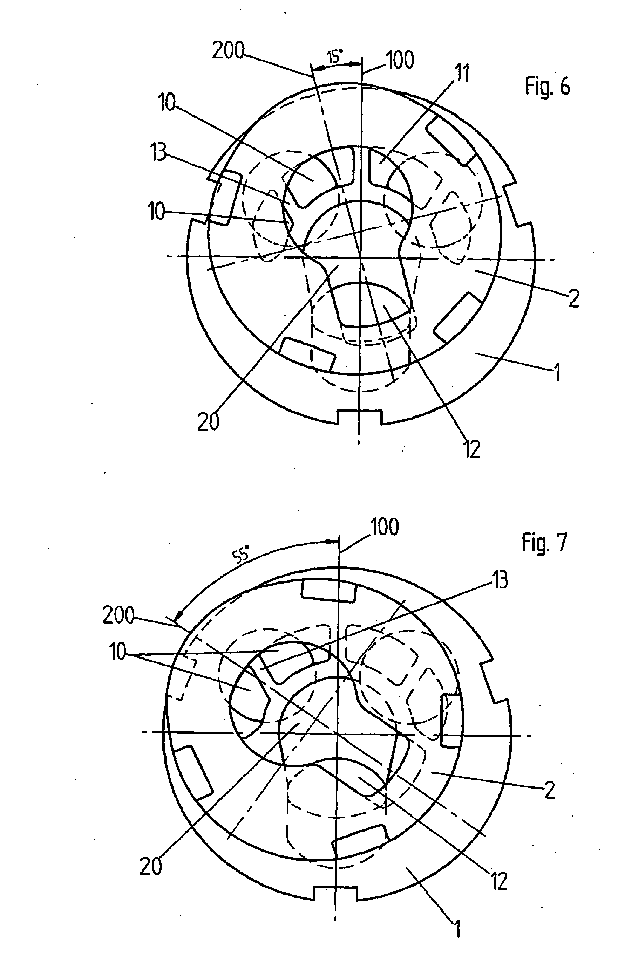

In Figur 5 der Zeichnung ist die maximale Radialverschiebung der Steuerscheibe 2 zur Ventilsitzscheibe 1 dargestellt. Wird nun die Steuerscheibe 2 von dem Stellhebel 31 aus mit einer Linksdrehung bewegt, so wird zunächst die Überdeckung der Durchtrittsöffnung 11 für Heißwasser mit dem Überströmkanal 20 entsprechend verringert, während die Überdeckung der Durchtrittsöffnung 10 für Kaltwasser mit dem Überströmkanal 20 nur geringfügig durch den Eintritt des Steges 13 vergrößert wird, so dass bezogen auf den Drehwinkel nur relativ kleine Temperaturabsenkungen des Mischwassers erzielt werden. Eine diesbezügliche Stellung ist in Figur 6 der Zeichnung dargestellt, wobei die Symmetrieachse 200 der Steuerscheibe 2 zur Symmetrieachse 100 der Ventilsitzscheibe 1 um 15° verdreht ist. Eine bezogen auf den Drehwinkel nur relativ kleine Temperaturerhöhung des Mischwassers kann mit einer entsprechenden Rechtsdrehung erzielt werden.
Wird dagegen die Steuerscheibe 2 mit einer weiteren Linksdrehung versehen, so gelangt nun verstärkt die Durchtrittsöffnung 10 für Kaltwasser mit dem Überströmkanal 20 in Überdeckung, so dass bezogen auf den Drehwinkel nunmehr verstärkt eine Absenkung der Mischwassertemperatur erzielt wird. In Figur 7 der Zeichnung ist die Steuerscheibe 2 mit einer Linksdrehung um 55° dargestellt, in der lediglich reines Kaltwasser über den Überströmkanal in die Durchtrittsöffnung 12 für den Wasserabfluss abgegeben wird. Mit einer Rechtsdrehung wird im Endbereich ebenfalls verstärkt zum Drehwinkel eine Temperaturerhöhung des Mischwassers erzielt.

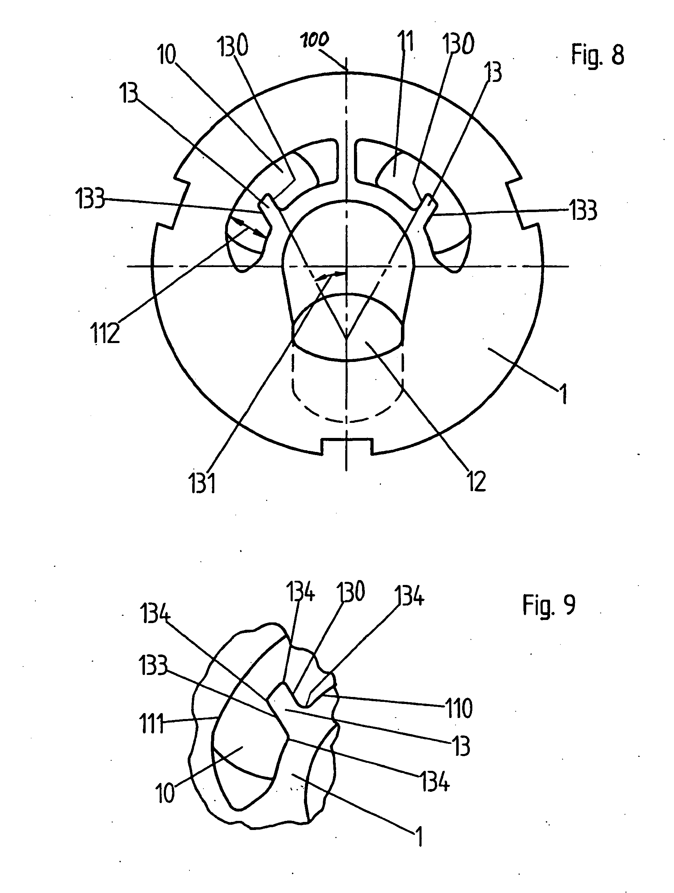

In Figur 8 und 9 der Zeichnung ist ein bevorzugtes Ausführungsbeispiel der Ventilsitzscheibe 1 dargestellt, wobei an der Ventilsitzscheibe 1 in gleicher Weise die in Figur 3 gezeigte Steuerscheibe 2 angelagert und in dem Kartuschengehäuse 3 eingesetzt werden kann.
In den Durchtrittsöffnungen 10, 11 sind die Stege 13 jedoch lediglich jeweils am inneren Kreisbogen 110 ausgebildet und erstrecken sich bis in die Mitte der Durchtrittsöffnung 10, 11. Hierdurch kann die freie Durchtrittsfläche der Durchtrittsöffnungen 10, 11 erheblich vergrößert werden, wobei die feinfühlige Einstellmöglichkeit der Mischwassertemperatur von 30° Celsius bis 45° Celsius im Wesentlichen erhalten bleibt. Die Stege 13 erstrecken sich somit etwa über die Hälfte der Breite 112 der Durchtrittsöffnungen 10, 11. Hierbei hat sich als besonders günstig erwiesen, wenn zu der ersten Seitenwand 130 die zweite Seitenwand 133 geneigt angeordnet ist, so dass der nockenförmige Steg 13 verjüngt ausgebildet ist. Hierbei hat sich als zweckmäßig erwiesen, wenn am vorderen Ende der Steg 13 etwa zwei Drittel der Breite des Steges 13 am inneren Kreisbogen 110 aufweist. Dabei sind die Seitenkanten 134 mit einem Radius von 0,3mm bis 0, 5mm verrundet, wie es insbesondere aus Figur 9 der Zeichnung zu entnehmen ist.

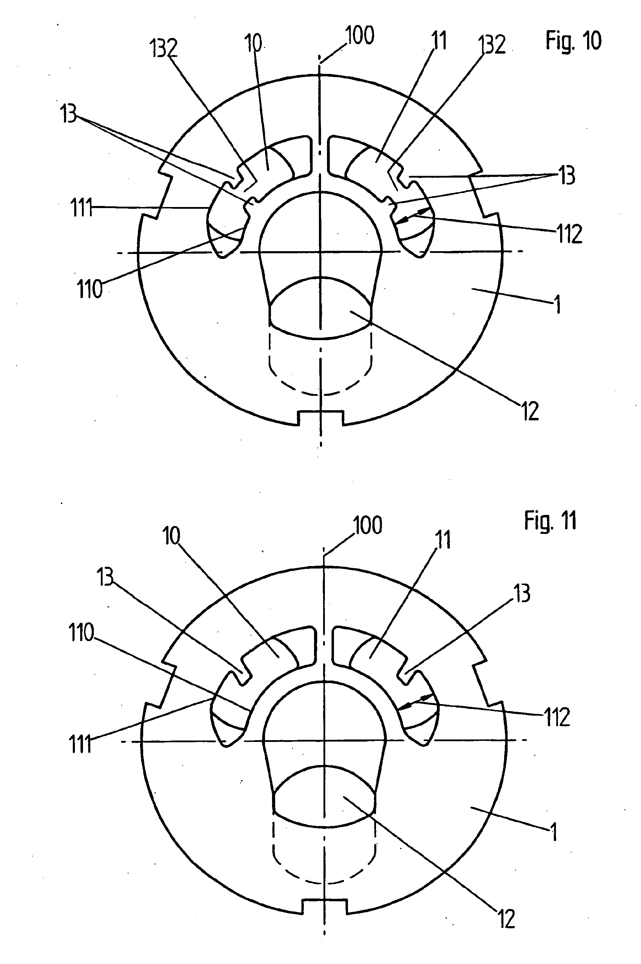

In Figur 10 der Zeichnung ist eine weitere alternative Ausbildung des Steges 13 in der Ventilsitzscheibe 1 dargestellt. Die Ventilsitzscheibe 1 weist im übrigen die gleichen Abmessungen auf, wie die in Figur 2 gezeigte Ventilsitzscheibe und kann somit ebenfalls mit der Steuerscheibe 2 gemäß Figur 3 in dem in Figur 1 gezeigten Mischventil eingesetzt werden.
Die Stege 13 sind hierbei im mittleren Bereich jeweils mit einer Unterbrechung 132 versehen, wobei die Unterbrechung 132 eine Länge von etwa dem 0,3-fachen bis 0,7-fachen der Breite 112 der Durchtrittsöffnung 10, 11 aufweisen kann.

Schließlich ist in Figur 11 der Zeichnung eine weitere Abwandlung der in Figur 8 und 9 dargestellten Ventilsitzscheibe 1 gezeigt. Der in Figur 8 und 9 gezeigte Steg 13 ist hierbei anstatt an dem inneren Kreisbogen 110, an dem äußeren Kreisbogen 111 angeordnet. Im übrigen entspricht der Steg 13 der Ausbildung nach Figur 8 und 9 der Zeichnung.
Mit dieser Ausbildung wird erreicht, dass die feinfühlige Einstellung der Mischwassertemperatur im Bereich von 30° Celsius bis 45° Celsius im Wesentlichen in der voll geöffneten Stellung des Mischventils zur Wirkung gelangt.

## Patentansprüche

1. Sanitäres Mischventil mit
- einer durch ein Griffstück zu einer ortsfest gehaltenen, Wasserdurchtrittsöffnungen (10,11,12) aufweisenden Ventilsitzscheibe (1) verstellbaren Steuerscheibe (2), mit der durch Drehung das Mischungsverhältnis und durch radiales Verschieben die Wasserauslaufmenge pro Zeiteinheit einstellbar ist,
- wobei für die Zuführung von Kalt- und Heißwasser kreisringausschnittförmige Durchtrittsöffnungen (10,11) zu beiden Seiten einer Symmetrieachse (100) sowie für die Rückführung von Kalt-, Heiß- oder Mischwasser eine zentrale Durchtrittsöffnung (12) in der Ventilsitzscheibe (1) vorgesehen sind und ein in der Steuerscheibe (2) ausgebildeter Überströmkanal (20) mit den Durchtrittsöffnungen (10,11,12) wahlweise in Überlappung bringbar ist, und
- wobei die kreisringausschnittförmigen Durchtrittsöffnungen (10, 11) jeweils von einem Steg (13) unterteilt sind,
**dadurch gekennzeichnet ,**
- **dass** die beiden Stege (13) so platziert sind, dass in der mittleren Mischstellung bei voll geöffnetem Durchfluss eine Seitenwand (21) des Überströmkanals (20) jeweils eine erste. Seitenwand (130) der beiden Stege (13) lediglich berührt, so dass in dieser Stellung die beiden Stege (13) außerhalb des Überströmkanals (20) angeordnet sind, und
- **dass** jeder Steg (13) eine Breite aufweist, die dem 0,8-fachen bis 1,2-fachen des kleinsten Abstandes (14) der beiden Durchtrittsöffnungen (10, 11) voneinander entspricht.

2. Mischventil nach Anspruch 1, **dadurch gekennzeichnet, dass** die Breite jedes Steges (13) etwa 10 % bis 12 % der Länge des Kreisbogens beträgt, über den sich die kreisringausschnittförmige Durchtrittsöffnung (10,11) jeweils erstreckt.

3. Mischventil nach Anspruch 1 oder 2, **dadurch gekennzeichnet, dass** die erste Seitenwand (130) des Steges (13) jeweils mit einem Winkel (131) von 25° bis 35° zur Symmetrieachse (100) geneigt angeordnet ist.

4. Mischventil nach wenigstens einem der vorhergehenden Ansprüche, **dadurch gekennzeichnet, dass** der Steg (13) jeweils im mittleren Bereich eine Unterbrechung (132) aufweist, so dass am inneren und am äußeren Kreisbogen (110, 111) der Durchtrittsöffnungen (10, 11) jeweils ein nockenförmiger Steg (13) gebildet ist.

5. Mischventil nach Anspruch 4, **dadurch gekennzeichnet, dass** die Unterbrechung (132) eine Länge aufweist, die dem 0,3-fachen bis 0,7-fachen der Breite (112) der Durchtrittsöffnung (10, 11) entspricht.

6. Mischventil nach wenigstens einem der vorhergehenden Ansprüche, **dadurch gekennzeichnet, dass** nur ein nockenartiger Steg (13) an dem inneren oder äußeren Kreisbogen (110, 111) der Durchtrittsöffnungen (10, 11) ausgebildet ist.

7. Mischventil nach Anspruch 6, **dadurch gekennzeichnet, dass** der nockenartige Steg (13) am inneren Kreisbogen (110) angeordnet ist und eine Länge aufweist, die dem 0,3-fachen bis 0,7-fachen der Breite (112) der Durchtrittsöffnung (10, 11) entspricht.

8. Mischventil nach Anspruch 6 oder 7, **dadurch gekennzeichnet, dass** zur ersten Seitenwand (130) des nockenartigen Steges (13) eine zweite Seitenwand (133) derart angeordnet ist, dass sich der Steg (13) verjüngt.

9. Mischventil nach Anspruch 8, **dadurch gekennzeichnet, dass** sich die Verjüngung stetig über die Länge des Steges (13) erstreckt und am vorderen Ende zwei Drittel der Breite des Steges (13) am Kreisbogen (110) aufweist.

10. Mischventil nach wenigstens einem der vorhergehenden Ansprüche, **dadurch gekennzeichnet, dass** die am Steg (13) ausgebildeten Seitenkanten (134) mit einem Radius verrundet sind.

11. Mischventil nach wenigstens einem der vorhergehenden Ansprüche, **dadurch gekennzeichnet, dass** die Stege (13) einstückig mit der Ventilsitzscheibe (1) hergestellt sind.

12. Mischventil nach wenigstens einem der vorhergehenden Ansprüche 1 bis 10, **dadurch gekennzeichnet, dass** die Stege am Boden des Ventilkartuschengehäuses angeordnet sind und in die Durchtrittsöffnungen der Ventilsitzscheibe hineinragen.

## Claims

1. Sanitary mixing valve having
- a control disc (2) arranged to be moved, by means of a grip piece, with respect to a valve seat disc (1) held in a stationary position and provided with water through-flow openings (10, 11, 12), by means of which control disc the mixing ratio is adjustable as a result of rotation and the water discharge amount per unit time is adjustable as a result of radial displacement,
- there being provided in the valve seat disc (1), for the inlet of cold and hot water, through-flow openings (10, 11) in the shape of sectors of an annulus on both sides of an axis of symmetry (100) and, for the return of cold, hot or mixed water, a central through-flow opening (12), and a flow-over channel (20) which is formed in the control disc (2) being arranged to be brought into overlap with the through-flow openings (10, 11, 12) as desired, and
- the through-flow openings (10, 11) in the shape of sectors of an annulus being in each case divided by a tongue (13),
**characterised in that**
- the two tongues (13) are so located that, in the middle mixing position, with the through-flow fully opened, a side wall (21) of the flow-over channel (20) just touches a first side wall (130) of each of the two tongues (13) so that, **in that** position, the two tongues (13) are arranged to the outside of the flow-over channel (20), and
- **in that** each tongue (13) has a width corresponding to 0.8 to 1.2 times the smallest spacing (14) of the two through-flow openings (10, 11) from one another.

2. Mixing valve according to claim 1, **characterised in that** the width of each tongue (13) is about 10 % to 12 % of the length of the arc through which the through-flow opening (10, 11) in the shape of a sector of an annulus extends in each case.

3. Mixing valve according to claim 1 or 2, **characterised in that** the first side wall (130) of the tongue (13) is in each case arranged inclined at an angle (131) of 25° to 35° to the axis of symmetry (100).

4. Mixing valve according to at least one of the preceding claims, **characterised in that** in each case the tongue (13) has an interruption (132) in the middle region so that a nose-shaped tongue (13) is formed in each case on the inner and on the outer arc (110, 111) of the through-flow openings (10, 11).

5. Mixing valve according to claim 4, **characterised in that** the interruption (132) has a length corresponding to 0.3 to 0.7 times the width (112) of the through-flow opening (10, 11).

6. Mixing valve according to at least one of the preceding claims, **characterised in that** only one nose-like tongue (13) is formed on the inner or outer arc (110, 111) of the through-flow openings (10, 11).

7. Mixing valve according to claim 6, **characterised in that** the nose-like tongue (13) is arranged on the inner arc (110) and has a length corresponding to 0.3 to 0.7 times the width (112) of the through-flow opening (10, 11).

8. Mixing valve according to claim 6 or 7, **characterised in that** a second side wall (133) is so arranged in relation to the first side wall (130) of the nose-like tongue (13) that the tongue (13) is tapered.

9. Mixing valve according to claim 8, **characterised in that** the taper extends continuously over the length of the tongue (13) and, at the front end, is about two thirds of the width of the tongue (13) at the arc (110).

10. Mixing valve according to at least one of the preceding claims, **characterised in that** the side edges (134) formed on the tongue (13) are rounded off with a radius.

11. Mixing valve according to at least one of the preceding claims, **characterised in that** the tongues (13) are manufactured integrally with the valve seat disc (1).

12. Mixing valve according to at least one of the preceding claims 1 to 10, **characterised in that** the tongues are arranged at the base of the valve cartridge housing and project into the through-flow openings of the valve seat disc.

## Revendications

1. Robinet mitigeur pour eau sanitaire comportant
- un disque de commande (2) tenu en position fixe par une poignée, et réglable par rapport à un disque de siège de vanne (1) ayant des orifices de passage d'eau (10, 11, 12), le disque de commande réglant par rotation, le rapport de mélange et par coulissement radial, le débit d'eau par unité de temps,
- des orifices de passage (10, 11) en forme de segments d'anneaux de cercles étant prévus pour l'arrivée d'eau froide et d'eau chaud des deux côtés d'un axe de symétrie (100) ainsi qu'un orifice de passage (12), central, pour le retour de l'eau froide, de l'eau chaude ou de l'eau mélangée dans le disque formant siège de vanne (1) et un canal de débordement (20) prévu dans le disque de commande (2) peut chevaucher sélectivement les orifices de passage (10, 11, 12) et
- les orifices de passage (10, 11) en forme de segments d'anneaux de cercles sont subdivisés chacun par une entretoise (13),
**caractérisé en ce que**
- les deux entretoises (13) sont disposées pour que dans la position de mélange médiane, lorsque le passage de débit total est ouvert, une paroi latérale (21) du canal de débordement (20) touche chaque fois uniquement une première paroi latérale (130) des deux entretoises (A), pour que dans cette position, les deux entretoises (13) se trouvent à l'extérieur du canal de débordement (20) et
- chaque entretoise (13) a une largeur correspondant à 0,8 fois jusqu'à 1,2 fois la plus petite distance (14) des deux orifices traversants (10, 11).

2. Robinet mitigeur selon la revendication 1,
**caractérisé en ce que**
la largeur de chaque entretoise (13) correspond sensiblement à 10 % jusqu'à 12 % de la longueur de l'arc de cercle suivant lequel s'étend l'orifice de passage (10, 11) respectif, en forme de segment d'anneau de cercle.

3. Robinet mitigeur selon la revendication 1 ou 2,
**caractérisé en ce que**
la première paroi latérale (130) de l'entretoise (13) est inclinée respectivement d'un angle (131) compris entre 25° et 35° par rapport à l'axe de symétrie (100).

4. Robinet mitigeur selon au moins l'une des revendications précédentes,
**caractérisé en ce que**
l'entretoise (13) présente une interruption (132) respective dans la zone centrale de façon à réaliser une entretoise (13) en forme de came sur l'arc de cercle intérieur et l'arc de cercle extérieur (110, 111) bordant les orifices traversants (10, 11).

5. Robinet mitigeur selon la revendication 4,
**caractérisé en ce que**
l'interruption (132) a une longueur qui correspond à 0,3 fois jusqu'à 0,7 fois la largeur (112) de l'orifice traversant (10, 11).

6. Robinet mitigeur selon au moins l'une des revendications précédentes,
**caractérisé en ce que**
seulement une entretoise (13) en forme de came est réalisée sur l'arc de cercle intérieur ou extérieur (110, 111) des orifices traversants (10, 11).

7. Robinet mitigeur selon la revendication 6,
**caractérisé en ce que**
l'entretoise en forme de came (13) est prévue sur l'arc de cercle intérieur (110) et sa longueur correspond à 0,3 fois jusqu'à 0,7 fois la largeur (112) de l'orifice traversant (10, 11).

8. Robinet mitigeur selon la revendication 6 ou 7,
**caractérisé en ce qu'**
une seconde paroi latérale (133) est disposée par rapport à la première paroi latérale (130) de l'entretoise (13) en forme de came pour que l'entretoise (13) aille en diminuant.

9. Robinet mitigeur selon la revendication 8,
**caractérisé en ce que**
la diminution se fait de manière continue sur toute la longueur de l'entretoise (13) et à l'extrémité avant elle représente deux tiers de la largeur de l'entretoise (13) au niveau de l'arc de cercle (110).

10. Robinet mitigeur selon au moins l'une des revendications précédentes,
**caractérisé en ce que**
les arêtes latérales (134) réalisées sur l'entretoise (13) sont arrondies avec un rayon de courbure.

11. Robinet mitigeur selon au moins l'une des revendications précédentes,
**caractérisé en ce que**
l'entretoise (13) est réalisée en une seule pièce avec le disque formant siège de vanne (1).

12. Robinet mitigeur selon au moins l'une des revendications 1 à 10,
**caractérisé en ce que**
les entretoises sont prévues au fond du boîtier en forme de cartouche de vanne et pénètrent dans les orifices traversants du disque formant siège de vanne.
